# EUROPEAN PATENT APPLICATION

(11) **EP 4 083 547 A1**
(43) Date of publication of application: **02.11.2022**
(21) Application number: 20905168.9
(22) Date of filing: 23.12.2020
(51) Int. Cl.: F25D 21/08

(54) **REFRIGERATOR**

(30) Priority: 26.12.2019 JP 2019236809
(71) Applicant: Qingdao Haier Refrigerator Co., Ltd, Qingdao, Shandong 266101 (CN); Haier Smart Home Co., Ltd., Qingdao, Shandong 266101 (CN); Aqua Co., Ltd, Chuou-Ku Tokyo 103-0012 (JP)
(72) Inventor: TATENO, Takaya, Tokyo 103-0012 (JP); KOMATSU, Hazime, Tokyo 103-0012 (JP); WADA, Yoshihiko, Tokyo 103-0012 (JP)
(74) Representative: Lavoix
(86) International application number: PCT/CN2020/138577
(87) International publication number: WO 2021/129654

(57) **Abstract**

A refrigerator (10), comprising: a refrigerating chamber (12); a cooling chamber (115), that is used for accommodating air that is blown to the refrigerating chamber (12); a freezing cycle (16); a defrosting and heating unit (117), that heats an evaporator (164) in order for defrosting; and a control unit (17), that controls the actions of the freezing cycle (16) and the defrosting and heating unit (117). In addition, when defrosting the evaporator (164), the control unit (17) controls the defrosting and heating unit (117) to heat the evaporator (164), and a refrigerant that is compressed in a compressor (161) and that has not passed through a condenser (162) is supplied to the evaporator (164).

## Description

### TECHNICAL FIELD

The present invention relates to a refrigerator, and in particular, to a refrigerator defrosted by hot gas.

### BACKGROUND

In a general refrigerator, each storage chamber is cooled to a desired refrigerating temperature range or freezing temperature range by blowing air cooled by an evaporator in a refrigerating cycle to each storage chamber. During a continuous cooling process using the refrigerating cycle, frost may be formed on a surface of the evaporator. Heat transfer between the evaporator and the air and air supply may be hindered when thick frost is generated on the surface of the evaporator. Therefore, operation of defrosting the evaporator is periodically performed during operation of the refrigerator.

In general defrosting operation, a defrosting heater disposed below the evaporator is energized to melt and remove the frost formed on the surface of the evaporator.

On the other hand, a hot gas defrosting refrigerator also arises, in which the defrosting operation is performed by supplying, to the evaporator, a high temperature refrigerant compressed by a compressor of the refrigerating cycle. In the hot gas defrosting refrigerator, due to avoidance of heat generation by energization, a structure of the refrigerator may be simplified, and defrosting energy may be reduced. For example, the hot gas defrosting refrigerator is described in the following patent documents 1 to 4: [patent document 1] Japanese patent No. 5369157; [patent document 2] Japanese patent No. 4837068; [patent document 3] Japanese patent No. 5253223; [patent document 4] Japanese patent No. 6545252.

In the above-described general hot gas defrosting operation, since the high temperature refrigerant is introduced into the evaporator, the refrigerant cooled by the evaporator is liquefied, the liquefied refrigerant is returned to the compressor, liquid backflow may occur, and there exists a risk of lowering a compression efficiency of the compressor.

### SUMMARY

In view of the above, the present invention is intended to provide a refrigerator preventing liquid backflow in a hot gas defrosting method.

In order to achieve the above-mentioned object, the present invention provides a technical solution as follows.

The refrigerator according to the present invention includes: a storage chamber; a cooling chamber for accommodating air blown to the storage chamber; a refrigerating cycle having a compressor, a condenser, an expansion device, and an evaporator, the air accommodated in the cooling chamber being cooled by the evaporator; a defrosting heating unit for heating the evaporator to defrost; and a control unit for controlling actions of the refrigerating cycle and the defrosting heating unit; wherein when the evaporator is defrosted, the control unit heats the evaporator by the defrosting heating unit and supplies, to the evaporator, a refrigerant compressed at the compressor and not passing through the condenser. Thus, in the refrigerator according to the present invention, when the high temperature refrigerant compressed at the compressor is supplied to the evaporator, since the evaporator is sufficiently heated up by the defrosting heating unit, the refrigerant at the evaporator may be prevented from being liquefied.

Furthermore, in the refrigerator according to the present invention, the compressor, the condenser, the expansion device, and the evaporator are connected with each other by refrigerant pipes; a switching portion is mounted in a middle of the refrigerant pipe for connecting the compressor and the condenser; the switching portion has a refrigerant inlet, a first refrigerant outlet, and a second refrigerant outlet; the refrigerant pipes include a first refrigerant pipe for connecting the compressor and the refrigerant inlet of the switching portion, a second refrigerant pipe for connecting the first refrigerant outlet of the switching portion and the condenser, a third refrigerant pipe for connecting the condenser and the expansion device, a fourth refrigerant pipe for connecting the expansion device and the evaporator, a fifth refrigerant pipe for connecting the second refrigerant outlet of the switching portion and a middle of the fourth refrigerant pipe, and a sixth refrigerant pipe for connecting the evaporator and the compressor; the control unit closes the first refrigerant outlet of the switching portion and opens the second refrigerant outlet, thereby supplying the refrigerant to the evaporator through the fifth refrigerant pipe. Thus, in the refrigerator according to the present invention, the high temperature refrigerant compressed at the compressor may be supplied to the evaporator to defrost using a simple method of switching the outlets of the switching portion serving as, for example, a three-way valve.

Furthermore, in the refrigerator according to the present invention, the fifth refrigerant pipe is thermally connected with the sixth refrigerant pipe. Thus, in the refrigerator according to the present invention, the refrigerant passing through the evaporator may be prevented from being returned to the compressor in a liquid state due to an active heat exchange between the fifth refrigerant pipe in which the high temperature refrigerant compressed at the compressor flows and the sixth refrigerant pipe in which the refrigerant passing through the evaporator flows.

Furthermore, in the refrigerator according to the present invention, the control unit increases an operation frequency of the compressor in response to a temperature increase of the evaporator when the refrigerant compressed at the compressor and not passing through the condenser is supplied to the evaporator. Thus, in the refrigerator according to the present invention, liquefaction of the high temperature refrigerant at the evaporator may be further prevented by slowly increasing the operation frequency of the compressor in the defrosting process.

### BRIEF DESCRIPTION OF THE DRAWINGS

The drawings are described here to provide further understanding of the present application, and form a part of the present application. The schematic embodiments and description of the present application are adopted to explain the present application, and do not form improper limits to the present application. In the drawings:
FIG. 1 is a perspective view showing an appearance of a refrigerator according to an embodiment of the present invention.
FIG. 2 is a side sectional view showing an internal structure of the refrigerator according to the embodiment of the present invention.
FIG. 3 is a schematic diagram showing a refrigerating cycle of the refrigerator according to the embodiment of the present invention, with FIG. 3(A) showing refrigerating operation and FIG. 3(B) showing defrosting operation.
FIG. 4 is a block diagram showing a connection structure of the refrigerator according to the embodiment of the present invention.
FIG. 5 is a flow chart showing a defrosting method of the refrigerator according to the embodiment of the present invention.
FIG. 6 is a timing diagram showing the defrosting method of the refrigerator according to the embodiment of the present invention.

In the drawings, 10-refrigerator; 11-thermal insulation cabinet; 111-outer cabinet; 112-inner cabinet; 113-thermal insulation material; 115-cooling chamber; 117-defrosting heating unit; 118-air supply passage; 12-refrigerating chamber; 13-freezing chamber; 14-mechanical chamber; 16-refrigerating cycle; 161-compressor; 162-condenser; 163-expansion device; 164-evaporator; 17-control unit; 18-thermal insulation door; 19-thermal insulation door; 20-thermal insulation door; 21-thermal insulation door; 22-switching portion; 221-refrigerant inlet; 222-first refrigerant outlet; 223-first refrigerant outlet; 23-refrigerant pipe; 231-first refrigerant pipe; 232-second refrigerant pipe; 233-third refrigerant pipe; 234-fourth refrigerant pipe; 235-fifth refrigerant pipe; 236-sixth refrigerant pipe; 24-indoor temperature sensor; 25-evaporator temperature sensor; 26-timer; 27-blower; 29-partition.

### DETAILED DESCRIPTION

Next, a refrigerator 10 according to an embodiment of the present invention will be described in detail based on the accompanying drawings. In the following description, the same members are denoted by the same reference numerals in principle, and repeated descriptions are omitted. In addition, in the following description, respective directions of up, down, front, rear, left, and right are used as appropriate, and left and right indicate the left and right when the refrigerator 10 is viewed from the front. Furthermore, in the present embodiment, the refrigerator 10 is exemplified as a refrigerator having a freezing chamber and a refrigerating chamber, but a refrigerator having only a freezing chamber or a refrigerator having only a refrigerating chamber may be adopted as the refrigerator 10.

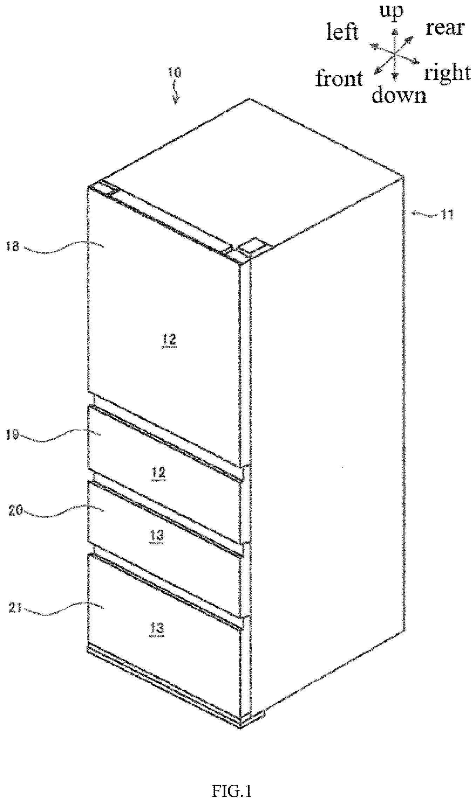

FIG. 1 is a perspective view of the refrigerator 10 according to the embodiment of the present invention as viewed from the right front side. The refrigerator 10 has a thermal insulation cabinet 11 and a storage chamber formed inside the thermal insulation cabinet 11. As the storage chambers, there exist a refrigerating chamber 12 and a freezing chamber 13 from the upper side. An upper section of a front opening of the refrigerating chamber 12 is closed by a thermal insulation door 18, and a lower section thereof is closed by a thermal insulation door 19. An upper section of a front opening of the freezing chamber 13 is closed by a thermal insulation door 20, and a lower section thereof is closed by a thermal insulation door 21. The thermal insulation door 18 is configured as a revolving door, and the thermal insulation doors 19, 20, and 21 are configured as pull-out doors.

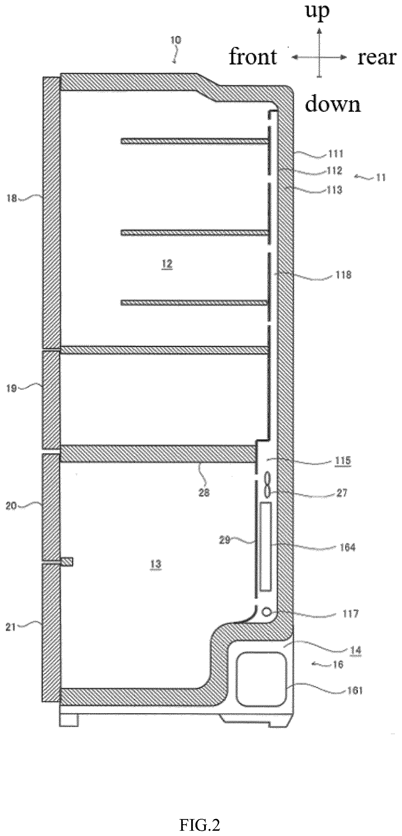

FIG. 2 is a side sectional view integrally showing the refrigerator 10. The thermal insulation cabinet 11 includes an outer cabinet 111 made of a steel plate bent into a predetermined shape; an inner cabinet 112 made of a synthetic resin plate, the inner cabinet being disposed on an inner side spaced apart from the outer cabinet 111; and a thermal insulation material 113 with which a space between the outer cabinet 111 and the inner cabinet 112 is filled.

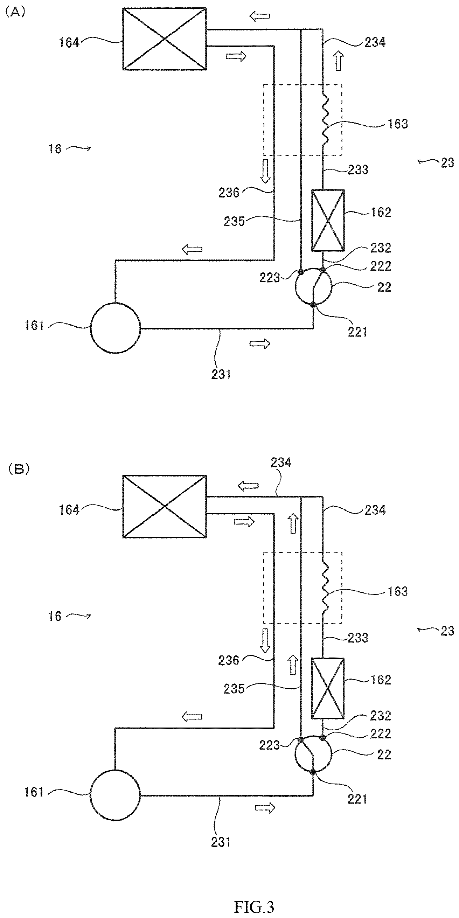

A cooling chamber 115 is formed on a rear side of the freezing chamber 13, and the freezing chamber 13 is separated from the cooling chamber 115 by a partition 29. An evaporator 164 as a cooler is provided inside the cooling chamber 115. Furthermore, a mechanical chamber 14 is formed at the rear of a lower end side of the refrigerator 10 by partition, and a compressor 161 is arranged in the mechanical chamber 14. The evaporator 164 and the compressor 161 form a refrigerant compression refrigerating cycle 16. Specifically, the refrigerating cycle 16 includes the compressor 161, a condenser 162 described later, an expansion device 163 described later, and the evaporator 164 described later. By operating the refrigerating cycle 16, cold air inside the cooling chamber 115 is cooled by the evaporator 164, and the cold air is blown to each storage chamber to bring a temperature inside each storage chamber into a predetermined cooling temperature range. The components forming the refrigerating cycle 16 are connected with each other by refrigerant pipes 23 described later, and the refrigerant pipe 23 is made of a metal pipe, such as a copper pipe, or the like. A structure of the refrigerant pipe 23 will be described with reference to FIG. 3, or the like.

Inside the cooling chamber 115, a blower 27 is arranged on an upper side of the evaporator 164. The blower 27 is configured as an axial flow blower or a centrifugal blower, and blows the cold air inside the cooling chamber 115 cooled by the evaporator 164 to the refrigerating chamber 12 and the freezing chamber 13.

Inside the cooling chamber 115, a defrosting heating unit 117 is arranged below the evaporator 164. The defrosting heating unit 117 is configured as a heater generating heat when energized. In the present embodiment, as described later, the evaporator 164 is effectively defrosted by cooperatively using hot gas defrosting operation and the defrosting heating unit 117. Furthermore, although not illustrated here, a cover device for closing the cooling chamber 115 during the defrosting operation is provided near the blower 27.

An air supply passage 118 is formed upwards from the cooling chamber 115. The air supply passage 118 has an opening formed therein for blowing the cold air to the refrigerating chamber 12. The cold air cooling the refrigerating chamber 12 is returned to the cooling chamber 115 through an air return passage (not shown), thus cooling the refrigerating chamber 12 to a specified refrigerating temperature range.

A part of the blown cold air is blown to the freezing chamber 13 by the control unit 17 through an opening formed in an upper portion of the partition 29, and the cold air cooling the freezing chamber 13 is returned to the cooling chamber 115 through an opening formed in a lower portion of the partition 29. Thus, the freezing chamber 13 is cooled to a specified freezing temperature range.

When the refrigerating chamber 12 and the freezing chamber 13 are continuously cooled by the refrigerating cycle 16, frost is generated at the evaporator 164 and blocks heat transfer and air flow of the evaporator 164, thus periodically defrosting the evaporator 164. In the defrosting operation, the operation of cooling the refrigerating chamber 12 and the freezing chamber 13 by the refrigerating cycle 16 is stopped, air supply by the blower 27 is stopped, and the evaporator 164 is defrosted by the hot gas defrosting operation by the refrigerating cycle 16 and heating operation by the defrosting heating unit 117. After the defrosting operation, the action of cooling the refrigerating chamber 12 and the freezing chamber 13 described above is resumed.

A structure of the refrigerating cycle 16 will be described with reference to FIG. 3. FIG. 3(A) is a schematic diagram showing the refrigerating cycle 16 during the cooling operation, and FIG. 3(B) is a schematic diagram showing the refrigerating cycle 16 during the defrosting operation.

The structure of the refrigerating cycle 16 will be described with reference to FIG. 3(A). The refrigerating cycle 16 mainly includes the compressor 161, the condenser 162, the expansion device 163, and the evaporator 164. A capillary tube or an expansion valve may be used as the expansion device 163. The components forming the refrigerating cycle 16 are connected by the refrigerant pipes 23.

A switching portion 22 is provided in a middle of the refrigerant pipe 23. The switching portion 22 is configured as a so-called three-way valve, and includes a refrigerant inlet 221 into which a refrigerant flows as well as a first refrigerant outlet 222 and a second refrigerant outlet 223 from which the refrigerant selectively flows out.

The refrigerant pipes 23 include a first refrigerant pipe 231, a second refrigerant pipe 232, a third refrigerant pipe 233, a fourth refrigerant pipe 234, a fifth refrigerant pipe 235, and a sixth refrigerant pipe 236. The compressor 161 is connected with the refrigerant inlet 221 of the switching portion 22 by the first refrigerant pipe 231. The first refrigerant outlet 222 of the switching portion 22 is connected with the condenser 162 by the second refrigerant pipe 232. The condenser 162 is connected with the expansion device 163 by the third refrigerant pipe 233. The expansion device 163 is connected with the evaporator 164 by the fourth refrigerant pipe 234. A bypass connection is performed on the second refrigerant outlet 223 of the switching portion 22 and a middle of the fourth refrigerant pipe 234 by the fifth refrigerant pipe 235. The evaporator 164 is connected with the compressor 161 by the sixth refrigerant pipe 236. Here, the fifth refrigerant pipe 235 is configured as a bypass pipe for supplying the high temperature refrigerant compressed at the compressor 161 to the evaporator 164 without passing through the condenser 162 and the expansion device 163.

The sixth refrigerant pipe 236, the fifth refrigerant pipe 235, the third refrigerant pipe 233, the expansion device 163, and the fourth refrigerant pipe 234 come into thermal contact with each other by waxing, or the like. Thus, during the defrosting operation, the high temperature refrigerant flowing in the fifth refrigerant pipe 235 may raise a temperature of the refrigerant flowing in the sixth refrigerant pipe 236, and liquid backflow may be prevented.

During the cooling operation, the refrigerant sequentially flows through the compressor 161, the first refrigerant pipe 231, the refrigerant inlet 221 and the first refrigerant outlet 222 of the switching portion 22, the second refrigerant pipe 232, the condenser 162, the third refrigerant pipe 233, the expansion device 163, the fourth refrigerant pipe 234, the evaporator 164, the sixth refrigerant pipe 236, and the compressor 161.

Referring to FIG. 3(B), in the defrosting operation using the hot gas defrosting method, the refrigerant does not pass through the condenser 162 and the expansion device 163, but is introduced into the evaporator 164 in an original high temperature vapor state, which is achieved by closing the first refrigerant outlet 222 of the switching portion 22 while releasing the second refrigerant outlet 223. The refrigerant sequentially flows through the compressor 161, the first refrigerant pipe 231, the refrigerant inlet 221 and the second refrigerant outlet 223 of the switching portion 22, the fifth refrigerant pipe 235, the fourth refrigerant pipe 234, the evaporator 164, the sixth refrigerant pipe 236, and the compressor 161.

In such a refrigerant flowing manner, the high temperature refrigerant not passing through the condenser 162 and the expansion device 163 may flow to the evaporator 164, thus melting the frost generated on a surface of the evaporator 164. Furthermore, due to the thermal contact between the sixth refrigerant pipe 236 and the fifth refrigerant pipe 235, the refrigerant cooled in the evaporator 164 and returned to the compressor 161 may be heated up and vaporized by the high temperature refrigerant passing through the fifth refrigerant pipe 235, and the liquid backflow may be prevented.

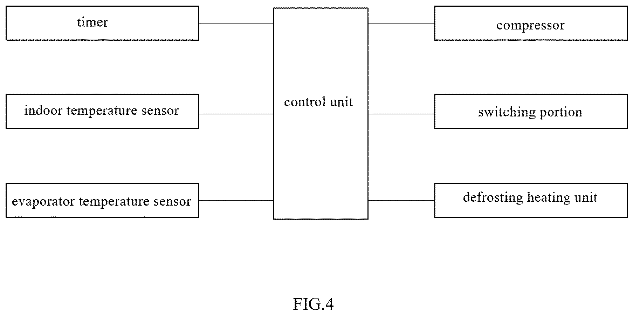

FIG. 4 is a block diagram showing a connection structure of the refrigerator 10.

The control unit 17 is configured as a calculation control element including a CPU, a RAM, a ROM, or the like.

A timer 26, an indoor temperature sensor 24, and an evaporator temperature sensor 25 are connected at input terminals of the control unit 17. The timer 26 measures working times and stop times of various components forming the refrigerator 10, such as the compressor 161, the switching portion 22, and the defrosting heating unit 117. The indoor temperature sensor 24 measures internal temperatures of the refrigerating chamber 12 and the freezing chamber 13. The evaporator temperature sensor 25 measures a temperature of the evaporator 164 or the cooling chamber 115.

The compressor 161, the switching portion 22, and the defrosting heating unit 117 are connected at output terminals of the control unit 17. The refrigerant is compressed by the compressor 161, a flow direction of the refrigerant is switched by the switching portion 22, and the defrosting heating unit 117 is configured as an electric heater for heating the evaporator 164.

The control unit 17 executes a specified calculation based on input information input from the timer 26, the indoor temperature sensor 24, and the evaporator temperature sensor 25, and controls operation or switching actions of the compressor 161, the switching portion 22, and the defrosting heating unit 117 based on the calculation.

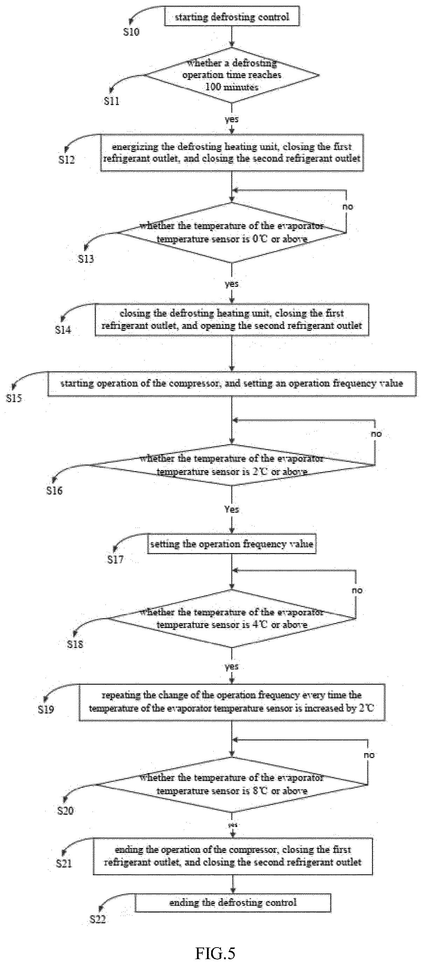

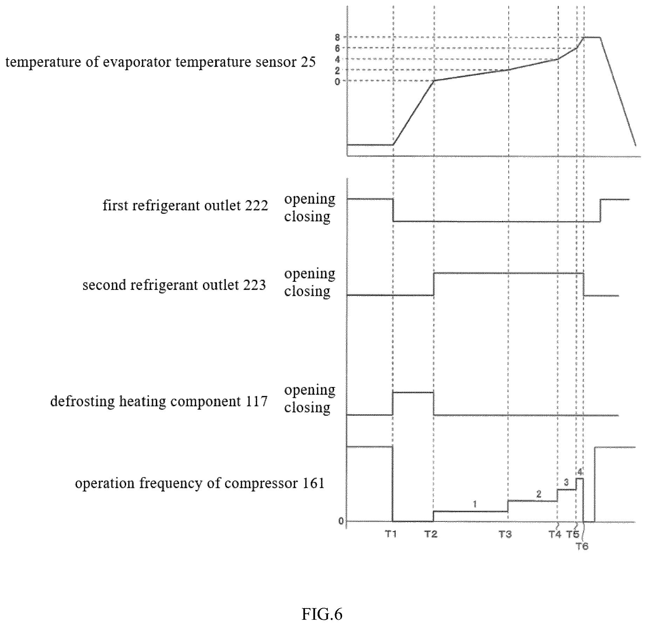

The defrosting operation in the refrigerator 10 having the above-mentioned structure is explained with reference to FIGS. 5 and 6. FIG. 5 is a flow chart showing the defrosting operation, and FIG. 6 is a timing diagram showing the defrosting operation. FIG. 6 shows the temperature of the evaporator temperature sensor 25, opening and closing states of the first refrigerant outlet 222, opening and closing states of the second refrigerant outlet 223, opening and closing states of the defrosting heating unit 117 generating heat by energization, and an operation frequency of the compressor 161.

In step S10, the control unit 17 starts the defrosting operation. That is, referring to FIG. 2, the blower 27 is stopped, the cooling operation by the refrigerating cycle 16 is stopped, and the cooling chamber 115 is closed using a damper, or the like.

In step S11, the control unit 17 judges whether the defrosting operation time measured by the timer 26 reaches a predetermined time, for example, 100 minutes. When the predetermined time is reached (i.e., yes in step S11), the control unit 17 proceeds to step S22 and ends the defrosting operation. On the other hand, when the predetermined time is not reached (i.e., no in step S11), the control unit 17 proceeds to step S12 and continues the defrosting operation.

In step S12, the control unit 17 energizes the defrosting heating unit 117 to generate heat, closes the first refrigerant outlet 222 of the switching portion 22, and also closes the second refrigerant outlet 223. At this point, since the compressor 161 is stopped, no refrigerant is supplied to the evaporator 164. In this way, referring to FIG. 2, the cooling chamber 115 and the evaporator 164 are warmed by the defrosting heating unit 117, the frost of the evaporator 164 is melted slowly, and the evaporator 164 and the cooling chamber 115 are further warmed. Step S12 corresponds to T1 in the timing diagram of FIG. 6.

In step S13, the control unit 17 judges whether the temperature of the evaporator 164 measured by the evaporator temperature sensor 25 is 0°C or above. When the temperature of the evaporator temperature sensor 25 is 0°C or above (i.e., yes in step S13), the control unit 17 proceeds to step S14. On the other hand, when the temperature of the evaporator temperature sensor 25 is lower than 0°C (i.e., no in step S13), the control unit 17 does not proceed to step S14, and the defrosting heating unit 117 continuously performs the heating operation. Step S13 corresponds to T1 to T2 in the timing diagram of FIG. 6.

In step S14, the control unit 17 ends the energization of the defrosting heating unit 117, closes the first refrigerant outlet 222 of the switching portion 22, and opens the second refrigerant outlet 223. Step S14 corresponds to T2 in the timing diagram of FIG. 6.

In step S15, the control unit 17 starts operation of the compressor 161 and sets an operation frequency of the compressor 161. Here, as shown in the timing diagram of FIG. 6, the control unit 17 sets to "1".

In step S16, the control unit 17 judges whether the temperature of the evaporator 164 measured by the evaporator temperature sensor 25 is 2°C or above. When the temperature of the evaporator temperature sensor 25 is 2°C or above (i.e., yes in step S16), the control unit 17 proceeds to step S17. On the other hand, when the temperature of the evaporator temperature sensor 25 is lower than 2°C (i.e., no in step S16), the control unit 17 does not proceed to step S17. Step S16 corresponds to T2 to T3 in the timing diagram of FIG. 6.

In step S17, the control unit 17 sets the operation frequency of the compressor 161. That is, the control unit 17 sets the operation frequency of the compressor 161 which is "1" in step S15 to "2". That is, a rotation frequency of the compressor 161 is doubled, and a flow rate of the high temperature refrigerant supplied to the evaporator 164 is increased, or the operation frequency of the compressor 161 is increased, and the flow rate of the high temperature refrigerant supplied to the evaporator 164 is doubled, thereby more actively performing the defrosting operation using the hot gas defrosting method. Since the temperature of the evaporator 164 rises to about 2°C, the liquid backflow may be suppressed even when the flow rate of the refrigerant supplied to the evaporator 164 is increased. Step S16 corresponds to T3 in the timing diagram of FIG. 6.

In step S18, the control unit 17 judges whether the temperature of the evaporator 164 measured by the evaporator temperature sensor 25 is 4°C or above. When the temperature of the evaporator temperature sensor 25 is 4°C or above (i.e., yes in step S18), the control unit 17 proceeds to step S19. On the other hand, when the temperature of the evaporator temperature sensor 25 is lower than 4°C (i.e., no in step S18), the control unit 17 does not proceed to step S19. Step S19 corresponds to T3 to T4 in the timing diagram of FIG. 6.

In step S19, the control unit 17 increases the operation frequency of the compressor 161 every time the temperature of the evaporator 164 measured by the evaporator temperature sensor 25 is increased by 2°C. That is, when the temperature of the evaporator 164 measured by the evaporator temperature sensor 25 is changed to 4°C or above, as shown by T4 to T5 in FIG. 6, the operation frequency of the compressor 161 is changed to "3". Furthermore, when the temperature of the evaporator 164 measured by the evaporator temperature sensor 25 is changed to 6°C or above, as shown by T5 to T6 in FIG. 6, the operation frequency of the compressor 161 is changed to "4". In this way, the flow rate of the high temperature refrigerant supplied to the evaporator 164 is increased, and the hot gas defrosting operation is more actively performed.

In step S20, the control unit 17 judges whether the temperature of the evaporator 164 measured by the evaporator temperature sensor 25 is 8°C or above. When the temperature of the evaporator temperature sensor 25 is 8°C or above (i.e., yes in step S20), the control unit 17 determines that the defrosting operation is sufficiently performed, and proceeds to step S21. On the other hand, when the temperature of the evaporator temperature sensor 25 is lower than 8°C (i.e., no in step S20), the control unit 17 determines that the defrosting operation is insufficient, and returns to step S19. Step S20 corresponds to T5 to T6 in the timing diagram of FIG. 6.

In step S21, the control unit 17 ends the operation of the compressor 161, closes the first refrigerant outlet 222 of the switching portion 22, closes the second refrigerant outlet 223, and proceeds to step S22 to end the defrosting operation. Step S21 corresponds to T6 in the timing diagram of FIG. 6.

When the defrosting operation of the evaporator 164 as described above is finished, the cooling operation by the refrigerating cycle 16 is resumed to cool the refrigerating chamber 12 and the freezing chamber 13.

The present invention is not limited to the above-mentioned embodiments, and in addition, various modifications are possible without departing from the scope of the gist of the present invention. Furthermore, the various forms described above may be combined with each other.

## Claims

1. A refrigerator (10), comprising:
a storage chamber;
a cooling chamber (115) for accommodating air blown to the storage chamber;
a refrigerating cycle (16) having a compressor (161), a condenser (162), an expansion device (163), and an evaporator (164), the air accommodated in the cooling chamber (115) being cooled by the evaporator (164);
a defrosting heating unit (117) for heating the evaporator (164) to defrost; and
a control unit (17) for controlling actions of the refrigerating cycle (16) and the defrosting heating unit (117);
wherein when the evaporator (164) is defrosted, the control unit (17) controls the defrosting heating unit (117) to heat the evaporator (164) and supplies, to the evaporator (164), a refrigerant compressed at the compressor (161) and not passing through the condenser (162).

2. The refrigerator (10) according to claim 1,
wherein the compressor (161), the condenser (162), the expansion device (163), and the evaporator (164) are connected with each other by refrigerant pipes (23);
a switching portion (22) is mounted in a middle of the refrigerant pipe (23) for connecting the compressor (161) and the condenser (162);
the switching portion (22) has a refrigerant inlet (221), a first refrigerant outlet (222), and a second refrigerant outlet (223);
the refrigerant pipes (23) comprise a first refrigerant pipe (231) for connecting the compressor (161) and the refrigerant inlet (221) of the switching portion (22), a second refrigerant pipe (232) for connecting the first refrigerant outlet (222) of the switching portion (22) and the condenser (162), a third refrigerant pipe (233) for connecting the condenser (162) and the expansion device (163), a fourth refrigerant pipe (234) for connecting the expansion device (163) and the evaporator (164), a fifth refrigerant pipe (235) for connecting the second refrigerant outlet (223) of the switching portion (22) and a middle of the fourth refrigerant pipe (234), and a sixth refrigerant pipe (236) for connecting the evaporator (164) and the compressor (161); and
the control unit (17) closes the first refrigerant outlet (222) of the switching portion (22) and opens the second refrigerant outlet (223), thereby supplying the refrigerant to the evaporator (164) through the fifth refrigerant pipe (235).

3. The refrigerator (10) according to claim 2,
wherein the fifth refrigerant pipe (235) is thermally connected with the sixth refrigerant pipe (236).

4. The refrigerator (10) according to any one of claims 1 to 3,
wherein the control unit (17) increases an operation frequency of the compressor (161) in response to a temperature increase of the evaporator (164) when the refrigerant compressed at the compressor (161) and not passing through the condenser (162) is supplied to the evaporator (164).
